# EUROPEAN PATENT SPECIFICATION

(11) **EP 2 891 548 B1**
(45) Date of publication and mention of the grant of the patent: **25.09.2019**
(21) Application number: 14198641.4
(22) Date of filing: 17.12.2014
(51) Int. Cl.: B26D 1/44, B26D 5/10, B26D 1/547, B26D 1/553, B26D 3/18, B26D 1/26, A47J 25/00, A23N 4/12, A23N 4/20, B23C 3/34, B26D 1/00

(54) **Device for excavating vegetables like pineapples or pumpkins**
Vorrichtung zum Aushöhlen von Obst und Gemüse wie Ananas oder Kürbis
Dispositif pour creuser des végétaux comme ananas et citrouilles

(30) Priority: 17.12.2013 ES 201331458 U
(43) Date of publication of application: 08.07.2015
(73) Proprietor: Ros Sanmartin, Ricardo, 30591 Balsicas (ES)
(72) Inventor: Ros Sanmartin, Ricardo, 30591 Balsicas (ES)
(74) Representative: Pons

(56) References cited:
- WO-A1-2004/045348
- CN-U- 203 167 981
- CN-U- 203 314 055
- GB-A- 2 371 973
- US-A- 4 546 545

## Description

The present invention relates to the technical field of the production of processed vegetable products.

More specifically, the device described here is especially useful in the handling of vegetables which one wants to have an interior cavity delimited by walls defined by a partial emptying of the vegetable.

### STATE OF THE ART

In various fields, such as the field of hotels or catering, use is made of vegetables as containers of any type of product. Said vegetable containers are usually pineapples, pumpkins or any other vegetable which have been emptied so that their interior has a cavity where other products such as sauces or others can be housed.

Likewise, the industry of pulps for frozen juices or the canning industries make use of the material removed in the emptying operation of the vegetables as raw material to produce said pulps.

It would be necessary to facilitate said emptying operation, whether totally or partially, cleanly, effectively and quickly which allows us to obtain, starting from any vegetable, a hollow body of said vegetable which acts as receptacle.

Today, use is made of different tools which allow, more or less effectively, the emptying of vegetables to obtain receptacles formed by the vegetables to obtain receptacles formed from a vegetable which has been at least partially emptied. In this way, kitchen utensils are known which allow the emptying of the vegetable; however, for the removal of the utensil once the emptying has been performed, a cut is made to the receptacle generated by the emptying process to be able to extract the material resulting from the internal emptying and the utensil itself, which generates a receptacle with cuts or openings which ultimately make the possible content of the receptacle spill, or which requires a closure or sealing of said cut used to access the inside of the vegetable.
The document published as WO2004045348A1 discloses a device for removing the core of a fruit, said device including a handle and a tubular member having first and second ends. The tubular member defines a longitudinal axis and has an interior region wherein one end of the circular tubular member is integral or fast with the handle and the second end defines a member cutting edge. The fruit coring device disclosed comprises a blade with a cutting edge supported within the circular interior of the circular tubular member substantially normal to the member cutting edge; said blade having a blade cutting edge, the blade being supported within the interior region of the tubular member such that the blade cutting edge lies substantially in a plane defined by the member cutting edge.

### DESCRIPTION OF THE INVENTION

The present invention relates to a manual or automated device which allows quickly, cleanly and simply to make a lower cavity in a body of a vegetable delimited by walls defined by a partial emptying process of the interior of the vegetable; an emptying process which is carried out with the aforementioned device.

The device presented here makes it possible to perform the total or partial selective emptying of vegetables so that receptacles can be obtained from said vegetables.

The device described here can be coupled to suitable machinery to make the device an automated tool.

### BRIEF DESCRIPTION OF THE FIGURES

- **FIG. 1**: Shows a perspective view of several possible configurations of the device object of the invention.
- **FIG. 2**: Shows a perspective view of a possible embodiment of the device object of the invention.
- **FIG. 3.**: Shows a perspective view of a possible embodiment of the device object of the invention located on the vegetable to process.
- **FIG. 4**: Shows a perspective view of a possible embodiment of the device object of the invention once the cut rotating on the vegetable to process has concluded.
- **FIG. 5.**: Shows a perspective view of the final result of the vegetable once processed.

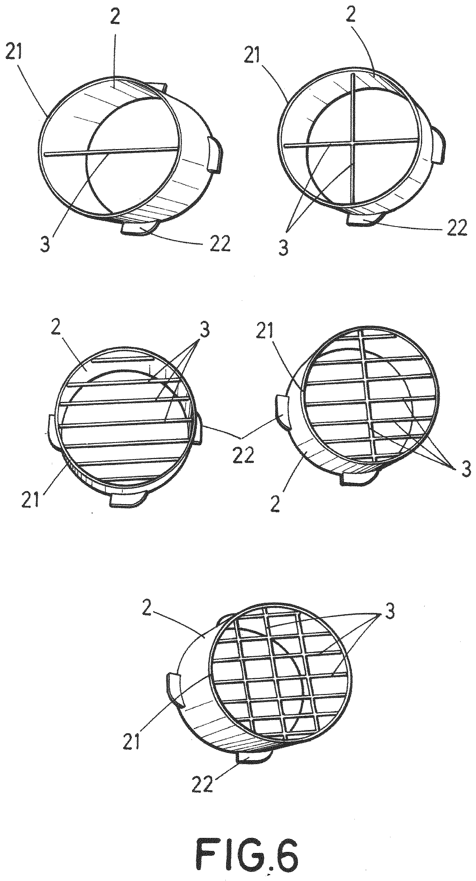

- **FIG. 6.**: Shows the possible configurations of the cutting element of the device.

### EXAMPLES

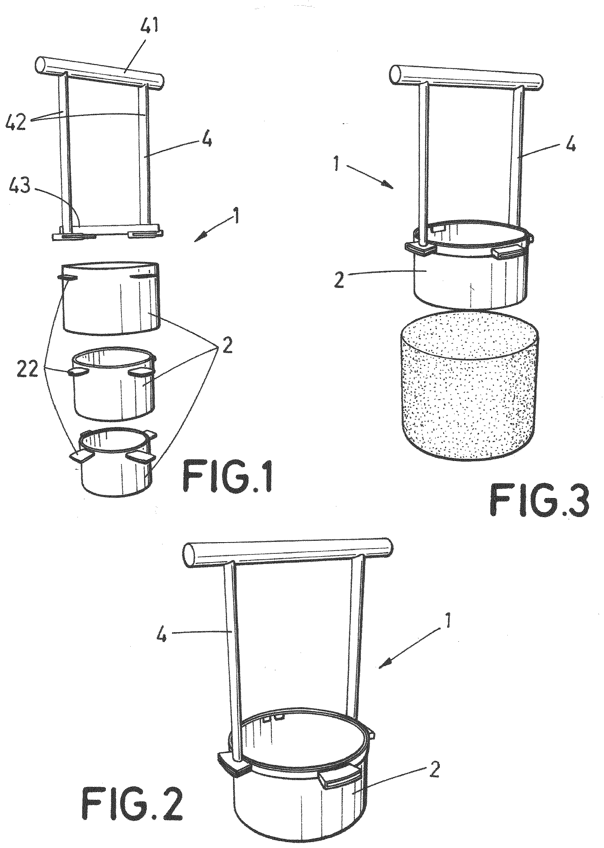

To be able to carry out the selecting emptying, at least partial, of a vegetable such as in this example of embodiment and non-restrictively, a cylindrical vegetable or a section thereof as shown in figure 2; use is made of the vegetable processing device (1) object of the invention, such as that shown in figure 1.

The device (1) has a body (2) which is defined by a hollow solid of revolution with at least one cutting element (3) defined in its interior between its walls; said body (2) is placed on the vegetable as shown in figure 3, and we exert a pressure on it until making the cutting element (3) reach an area close to but not adjoining the base of the interior of the vegetable. The cutting element (3) is preferably located in a lower part of the body (2) and disposed perpendicular to a longitudinal axis of said body (2).

So that the body (2) can penetrate in the vegetable, the body (2) has a sufficiently thin wall thickness so that it acts as cutting element, however and in a possible embodiment of the object of the invention it may be that the body (2) additionally comprises a blade (21) in its lower end, where said blade has a dimension in thickness less than that of the wall of the body (2) facilitating the insertion task in the vegetable. The device (1) described here may include at least one stop (22) defined in an upper part of the body (2) of the device (1) opposite that part which is inserted in the vegetable. Said stop (22) acts as depth limiter, for example between approximately 3 and 4 cm, of insertion of the device (1) in the vegetable to obtain an emptying with a depth corresponding to the distance between the stop (22) and the cutting element (3) or element of insertion in the vegetable, which is of use in small vegetables such as a section of courgette by way of medallion.

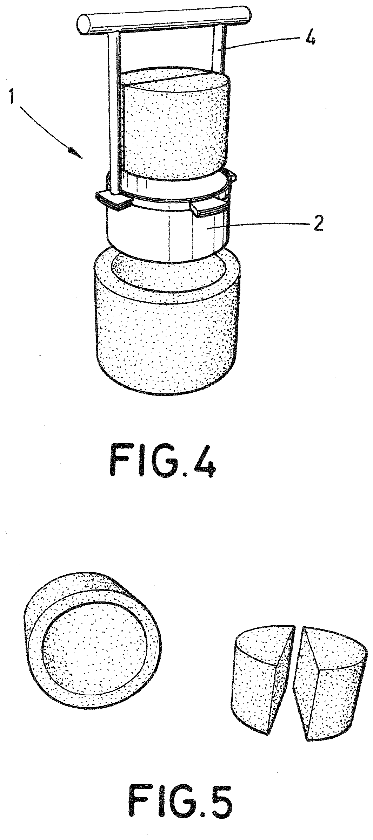

By a rapid rotation, left or right, of the body (2) already inserted in the vegetable it produces, by action of the cutting element (3), a section of the interior of the vegetable such as that observed in figure 4.

The device (1) described here additionally comprises at least one manipulation element (4) such as that observed in figure 1, comprising a handle (41) and two elements (42) extending orthogonally from the handle (4) to a structure (43) which can be fixed to the body (2) either by a threaded joint or by a guide and tab joint so that the body (2) is arranged at a certain distance form the handle (41); said manipulation element (4) is designed to facilitate the insertion of the body (2) in the vegetable and said rotation of the body (2) in the interior of the vegetable.

Although in an embodiment the cutting element (3) is a filament of a material which is selected from among: plastic, textile and metal, and has a length essentially equal to an orthogonal distance between opposite points of the walls passing through the longitudinal axis of the body (2) and a thickness comprised between 0.1mm and 1 mm; in this document, different possible preferred embodiments are provided wherein the cutting element (3) responds to a configuration which has more than one filament or blade, which may be a cutting element (3) which comprises more than one filament or blade disposed in a cross, or a cutting element (3) which has a mesh or net configuration of polygonal elements defined by crosses between the different filaments or blades as observed in figure 5.

## Claims

1. Vegetable processing device (1), comprising :
• a hollow body (2),
• at least one cutting element (3) which is a filament defined in the interior of the body (2) between its walls and located in a lower part of the body (2) and disposed perpendicular to a longitudinal axis of said body (2), the body (2) comprising in turn a blade (21) in its lower end, where said blade has a dimension in thickness less than that of the body (2),
the device being **characterized in that** it comprises:
• a manipulation element (4) to facilitate the insertion of the body (2) in the vegetable and rotate in the interior thereof said manipulation element (4) comprising a handle (41) and two elements (42) extending orthogonally from the handle (4) to a structure (43) configured to be fixed to the body (2) so that the body (2) is arranged at a certain distance form the handle (41),
• a stop (22) defined in an upper part of the body (2) of the device (1) opposite that part which is inserted in the vegetable designed to perform a function of insertion depth limiter of the device (1) in the vegetable.

2. Device (1) according to claim 1, wherein the body (2) is a hollow solid of revolution.

3. Device (1) according to claim 1, wherein the manipulation element (4) is fixed to the body (2) using fixing means by a threaded joint.

4. Device (1) according to claim 1, wherein the manipulation element (4) is fixed to the body (2) using fixing means defined by a guide and tab joint.

5. Device (1) according to any of claims 1 to 4, wherein the cutting element (3) is a filament of a material which is selected from among: plastic, textile and metal.

6. Device (1) according to any of claims 1 to 5, wherein the cutting element (3) has a length essentially equal to an orthogonal distance between opposite points of the walls passing through the longitudinal axis of the body (2) and a thickness comprised between 0.1mm and 1mm.

7. Device (1) according to any of claims 1 to 6, wherein the structure (43) is fixed to the body (2) by a guide and tab joint, the tab being the stop (22).

## Patentansprüche

1. Vorrichtung (1) zur Gemüseverarbeitung, umfassend:
• einen Hohlkörper (2),
• mindestens ein Schneidelement (3), das ein Draht, der im Inneren des Körpers (2) zwischen seinen Wänden definiert ist und sich im unteren Teil des Körpers (2) befindet und senkrecht zur Längsachse des Körpers (2) angeordnet ist, wobei der Körper (2) wiederum an seinem unteren Ende eine Schneide (21) umfasst, wobei die Schneide eine geringere Dickenabmessung als diejenige des Körpers (2) aufweist, wobei die Vorrichtung **dadurch gekennzeichnet ist, dass** sie Folgendes umfasst:
• ein Handhabungselement (4), zum Erleichtern des Einführens des Körpers (2) in das Gemüse und zum Drehen des Handhabungselements (4) im Inneren davon, das einen Griff (41) und zwei Elemente (42) umfasst, die sich orthogonal vom Griff (4) zu einer Struktur (43) erstrecken und zur Befestigung am Körper (2) konfiguriert sind, sodass der Körper (2) in einem bestimmten Abstand vom Griff (41) angeordnet ist,
• einen Anschlag (22), definiert in einem oberen Teil des Körpers (2) der Vorrichtung (1), gegenüber dem Teil, der in das Gemüse eingeführt wird, wobei er zum Ausführen einer Funktion eines Begrenzers der Einführungstiefe der Vorrichtung (1) in das Gemüse gestaltet ist.

2. Vorrichtung (1) gemäß Anspruch 1, wobei der Körper (2) ein hohler Rotationskörper ist.

3. Vorrichtung (1) gemäß Anspruch 1, wobei das Handhabungselement (4) unter Verwendung von Befestigungsmitteln durch eine Gewindeverbindung an dem Körper (2) befestigt ist.

4. Vorrichtung (1) gemäß Anspruch 1, wobei das Handhabungselement (4) unter Verwendung von Befestigungsmitteln, die durch eine Führungs- und Laschenverbindung definiert sind, befestigt ist.

5. Vorrichtung (1) gemäß jedem der Ansprüche 1 bis 4, wobei das Schneidelement (3) ein Draht aus einem Werkstoff besteht, der aus Folgendem ausgewählt ist: Kunststoff, Textil und Metall.

6. Vorrichtung (1) gemäß jedem der Ansprüche 1 bis 5, wobei das Schneidelement (3) eine Länge, die im Wesentlichen dem orthogonalen Abstand zwischen gegenüberliegenden Punkten der Wände entspricht, wobei diese durch die Längsachse des Körpers (2) läuft, und einer Dicke zwischen 0,1 mm und 1 mm aufweist.

7. Vorrichtung (1) nach einem der Ansprüche 1 bis 6, wobei die Struktur (43) durch eine Führungs- und Laschenverbindung an dem Körper (2) befestigt ist, wobei die Lasche der Anschlag (22) ist.

## Revendications

1. Dispositif de traitement de légumes (1), comprenant :
• un corps creux (2),
• au moins un élément coupant (3) qui est un filament défini à l'intérieur du corps (2) entre ses parois et situé dans une partie inférieure du corps (2) et disposé perpendiculairement à un axe longitudinal dudit corps (2), le corps (2) comprenant à son tour une lame (21) dans son extrémité inférieure, où ladite lame a une dimension en épaisseur inférieure à celle du corps (2), le dispositif étant **caractérisé en ce qu'**il comprend :
• un élément de manipulation (4) pour faciliter l'insertion du corps (2) dans le légume et pour faire tourner à l'intérieur de celui-ci ledit élément de manipulation (4) comprenant un manche (41) et deux éléments (42) s'étendant orthogonalement du manche (4) à une structure (43) configurée pour être fixée au corps (2) de sorte que le corps (2) soit disposé à une certaine distance du manche (41),
• une butée (22) définie dans une partie supérieure du corps (2) du dispositif (1) opposée à la pièce qui est insérée dans le légume destinée à remplir une fonction de limiteur de profondeur d'insertion du dispositif (1) dans le légume.

2. Dispositif (1) selon la revendication 1, dans lequel le corps (2) est un solide de révolution creux.

3. Dispositif (1) selon la revendication 1, dans lequel l'élément de manipulation (4) est fixé au corps (2) en utilisant des moyens de fixation par une liaison filetée.

4. Dispositif (1) selon la revendication 1, dans lequel l'élément de manipulation (4) est fixé au corps (2) en utilisant des moyens de fixation définis par une liaison de guidage et de languette.

5. Dispositif (1) selon l'une quelconque des revendications 1 à 4, dans lequel l'élément de coupe (3) est un filament en un matériau choisi parmi : le plastique, le textile et le métal.

6. Dispositif (1) selon l'une quelconque des revendications 1 à 5, dans lequel l'élément de coupe (3) a une longueur essentiellement égale à une distance orthogonale entre des points opposés des parois passant par l'axe longitudinal du corps (2) et une épaisseur comprise entre 0,1 mm et 1 mm.

7. Dispositif (1) selon l'une quelconque des revendications 1 à 6, dans lequel la structure (43) est fixée au corps (2) par une liaison de guidage et de languette, la languette étant la butée (22).
